# DEMANDE DE BREVET EUROPEEN

(11) **EP 1 039 610 A1**
(43) Date de publication de la demande: **27.09.2000**
(21) Numéro de dépôt: 00400756.3
(22) Date de dépôt: 17.03.2000
(51) Int. Cl.: H02G 9/10, G02B 6/44

(54) **Dispositif de raccordement d'une infrastructure multitubulaire et procédé d'acrès à ce dispositif**

(30) Priorité: 19.03.1999 FR 9903444; 22.11.1999 FR 9914670
(71) Demandeur: FRANCE TELECOM, 75015 Paris (FR)
(72) Inventeur: Mignon, Pierre, 94230 Cachan (FR); Crespel, Daniel, 94230 Cachan (FR); Schreiber, Yannick, 94230 Cachan (FR)
(74) Mandataire: Ballot, Paul

(57) **Abrégé**

Dispositif de raccordement entre l'extrémité de tubes (2) protégeant un ou plusieurs câbles (9) et un boîtier (4), caractérisé en ce qu'il comprend un fourreau souple (3) permettant, en sortie des tubes (2), de raccorder au boîtier (4) les câbles (9) issus des tubes (2) en assurant la protection desdits câbles (9) et en permettant le déport du boîtier (4) auquel on doit accéder.

## Description

L'invention se rapporte à un dispositif de raccordement entre l'extrémité de tubes et un boîtier dont est issue une pluralité de câbles.

Le domaine de l'invention est celui d'un réseau câblé de télécommunications, d'énergie, d'éclairage ou de signalisation.

Nous décrirons plus particulièrement un réseau câblé de télécommunications, qui regroupe lui-même plusieurs types de réseaux auxquels correspondent différentes morphologies d'infrastructures. On distingue :
- les réseaux d'interconnexion qui relient des réseaux d'opérateurs de télécommunications distincts. Les liaisons entre ces réseaux empruntent des conduites souterraines exploitées en commun.
- les réseaux de transmission appartenant à un ou plusieurs opérateurs et comprenant des noeuds appelés centraux de télécommunications. Les transmissions sont parfois effectuées par voie hertzienne mais devant la quantité, la confidentialité et la sécurisation des informations à transmettre, les transmissions par câbles notamment les câbles à fibres optiques leur sont souvent préférés. Différents types de câbles sont utilisés pour ces transmissions : les câbles aériens qui n'offrent pas toujours un degré de sécurité suffisant pour un opérateur exposant ainsi son infrastructure, les câbles sous-marins ou sous-fluviaux dont la pose est très coûteuse et qui ne sont employés qu'en cas de nécessité ou enfin, les câbles souterrains et les câbles d'immeubles.
- le réseau de distribution, appelé aussi « boucle locale » et qui désigne la partie du réseau située entre un central de télécommunications et le client. Dans le cas d'un milieu rural, la faible densité de population permet d'optimiser les investissements en utilisant des câbles aériens, ou des moyens de transmission sans fil par transmission hertzienne, radio ou satellite. Inversement en milieu urbain, la densité de population favorise l'emploi de conduites souterraines. Le dimensionnement de ces réseaux varie selon les opérateurs mais la topologie reste identique : un ensemble de chambres d'accès souterraines ou sur chaussée, généralement reliées par des conduites souterraines. Cette topologie offre une protection aux câbles, et facilite leur mise en place. Elle permet également d'accéder ou d'intervenir ultérieurement sur les câbles en fonction de l'évolution du réseau pouvant nécessiter la dépose des câbles. Dans le cas du déposant France Télécom, ce réseau est le plus souvent constitué de chambres reliées par des conduites de diamètre inférieur à 80 mm, disposées en groupe sur des distances pouvant varier de quelques mètres jusqu'à 300 m.
- les réseaux privés de télécommunications que des entreprises, des collectivités locales ou autres entités installent afin de favoriser l'échange d'informations internes indépendamment de l'opérateur. Cette exploitation permet de partager les ressources à moindre coût. Dans certains cas, la multiplicité des bâtiments d'une entreprise implique des liaisons extérieures aux bâtiments. Si ces bâtiments sont localisés sur un même site, la morphologie de l'infrastructure peut être semblable à celle du réseau de distribution décrit ci-dessus. Si les sites sont distants, l'entreprise fait appel à un opérateur de télécommunications pour utiliser son réseau. Dans ce cas les informations transitent par un réseau de distribution puis par un réseau de transmission.

Différentes morphologies d'infrastructure peuvent donc être envisagées selon le réseau considéré et la solution retenue : les câbles peuvent être placés en pleine terre ou non, noyés ou non dans du béton ou du bitume, posés en conduites souterraines voire sous-marines ou sous-fluviale, fixés à des appuis aériens reposant sur des poteaux, des parois, etc. L'infrastructure souterraine est la plus utilisée actuellement. L'invention s'applique de façon générale à toute infrastructure et plus particulièrement à une infrastructure souterraine.

On va rappeler dans ce qui suit un certain nombre de définitions qui vont permettre de mieux comprendre et de mieux situer le domaine de l'invention.

Dans la présente invention, on entend par conducteurs aussi bien des fils de cuivre pour transmission téléphonique que des éléments dans lesquels de la lumière peut se propager telles que des fibres optiques. Ces éléments à fibres optiques peuvent être filiformes et regroupés dans des éléments en forme de ruban souvent désignés par câble à ruban. Les conducteurs peuvent aussi désigner des éléments filiformes ou en forme de bande conducteurs de l'électricité, notamment des fils métalliques, par exemple en cuivre.

On entend par câble l'ensemble constitué d'un ou plusieurs conducteurs protégés par une gaine ou enveloppe. On trouve parfois dans la littérature le terme câble désigné par conducteur.

Il existe plusieurs structures de câbles. Parmi les câbles optiques citons le câble comprenant un groupe de 4 à 10 modules de 6 à 24 fibres optiques, le diamètre de ce type de câble atteignant jusqu'à présent 18 mm, et le microcâble pouvant contenir jusqu'à 24 fibres optiques éventuellement regroupées en modules et dont le diamètre varie entre 1,5 à 6,5 mm, ce qui correspond à une réduction de diamètre par un facteur 3.

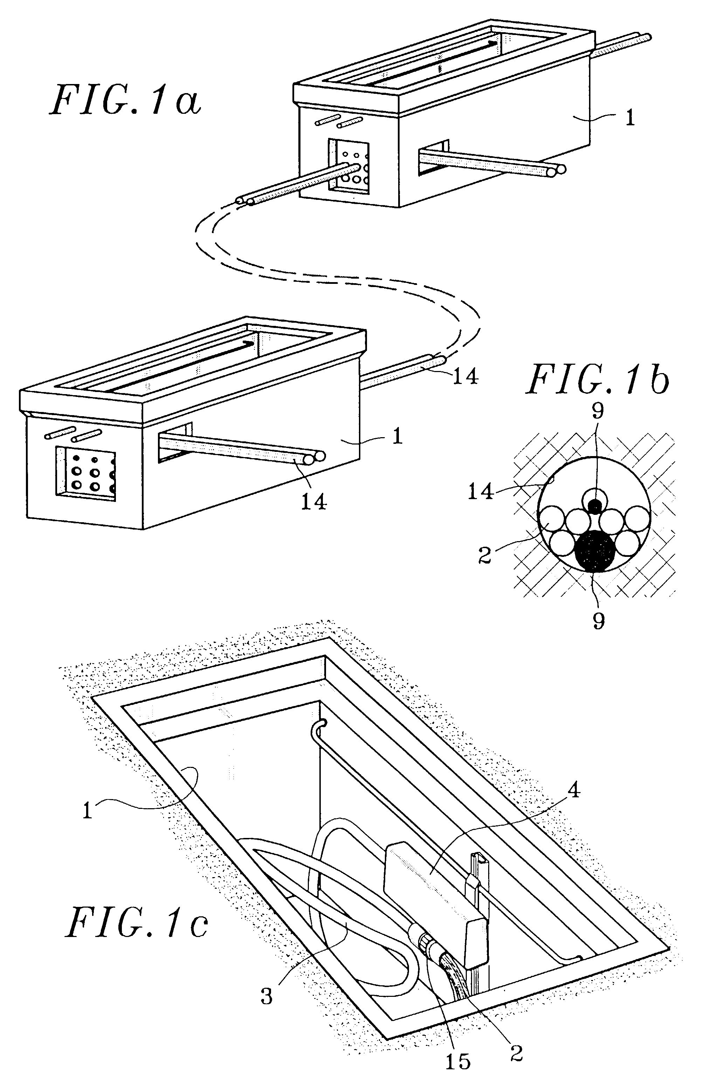

Comme indiqué en figure 1 b), dans certains cas, les câbles 9 sont posés librement dans les conduites 14, dans d'autres cas il sont abrités par un ou plusieurs tubes 2 d'une rigidité supérieure à celle des câbles 9. La réduction des coûts associée à la miniaturisation des diamètres des câbles permet d'envisager la pose dans les conduites d'une pluralité de petits tubes. Dans le cas des réseaux de distribution, le diamètre de ces tubes varie de 5 à 18 mm et ils sont fabriqués dans des matériaux comme le polychlorure de vinyle (PVC), le polyéthylène (PE) ou le polypropylène (PP).

On entend par chambre d'accès ou chambre de tirage, un espace auquel aboutissent et /ou d'où partent les câbles ou les tubes. Ces chambres d'accès peuvent être préfabriquées ou construites in situ. Elles sont souvent placées sous les trottoirs et fabriquées en béton armé. Dans ces chambres d'accès, les câbles sont souvent raccordés à des boîtiers.

On entend par boîtier un élément facilitant et protégeant le raccord des conducteurs et des câbles. Il existe principalement deux catégories de boîtiers. Le boîtier en ligne se caractérise par une entrée et une sortie de câbles en opposition. Lorsque tous les câbles arrivent ou sortent du même côté, c'est un boîtier épi. Ces boîtiers sont étanches, protègent les conducteurs et les connexions et facilitent les interventions ultérieures.

La rigidité des tubes fabriqués par exemple en PVC est favorable à la pose d'un tube en pleine terre, noyé dans du béton, ou en conduite et garantit que les caractéristiques dimensionnelles du tube seront préservées. Dans le concept de miniaturisation des diamètres des câbles et des tubes, les tubes de petite dimension sont assez souples pour arriver directement sur le boîtier en lieu et place des câbles : des surlongueurs de tubes peuvent alors être rangées et éventuellement lovées dans la chambre d'accès en prévision des interventions ultérieures. Mais l'accroissement de la raideur et du nombre de ces tubes et la gestion des surlongueurs provoque un encombrement des chambres d'accès ce qui ne facilite pas l'intervention. Dans d'autres cas, les tubes sont coupés à l'entrée de la chambre d'accès ou peu après celle-ci libérant ainsi les câbles plus souples que les tubes. Mais si la souplesse des câbles améliore l'ergonomie des interventions ultérieures, les câbles ainsi libérés du ou des tubes cheminent sans protection jusqu'au boîtier et sont donc vulnérables.

La présente invention permet de remédier à ces inconvénients en proposant un dispositif de raccordement à un boîtier de câbles issus de tubes, assurant la transition entre tubes et câbles et la protection des câbles jusqu'au boîtier. Elle facilite ainsi l'extraction d'un boîtier de la chambre d'accès ou son déport en permettant de stocker de grandes surlongueurs de câbles protégés, sans être handicapé par la rigidité des tubes, et d'une manière générale, en facilitant beaucoup les interventions de vérification ou de réparation.

Dans le dispositif de raccordement entre l'extrémité de tubes protégeant un ou plusieurs câbles et un boîtier, un fourreau souple permet, en sortie des tubes, de raccorder au boîtier les câbles issus des tubes en les protégeant et en permettant le déport du boîtier auquel on doit accéder.

Le fourreau souple comporte avantageusement un tuyau à enveloppe extrudée ou plissée hélicoïdalement et est susceptible de comprendre un raccord à chacune de ses extrémités pour assurer le montage ou le démontage.

Selon une autre caractéristique, le dispositif comporte un collecteur de tubes pour assembler l'extrémité des tubes. En outre, le collecteur est susceptible de comprendre un moyen pour assurer un passage étanche des câbles. Ce moyen comporte avantageusement une membrane en élastomère.

Selon une autre caractéristique, le collecteur est raccordé au fourreau. Le collecteur comprend éventuellement des conduits pour maintenir les tubes en position. Les conduits peuvent être situés en périphérie du collecteur.

Pour faciliter le passage des câbles du collecteur au fourreau, le dispositif comporte un élément de transition situé entre le collecteur et le fourreau.

L'invention a également pour objet un procédé d'accès à des câbles arrivant à un boîtier situé dans une chambre d'accès, consistant à placer lesdits câbles dans un fourreau souple et de longueur suffisante pour pouvoir déporter le boîtier auquel on doit accéder.

D'autres particularités et avantages de l'invention apparaîtront clairement à la lecture de la description faite à titre d'exemple non limitatif et en regard des dessins annexés sur lesquels :
- la figure 1 a) représente une vue schématique d'une infrastructure souterraine,
- la figure 1 b) représente une vue en coupe d'une conduite,
- la figure 1 c) représente une chambre d'accès vue de dessus,
- la figure 2 représente une vue schématique du dispositif de raccordement,
- la figure 3 a) représente une vue de profil du collecteur selon l'invention,

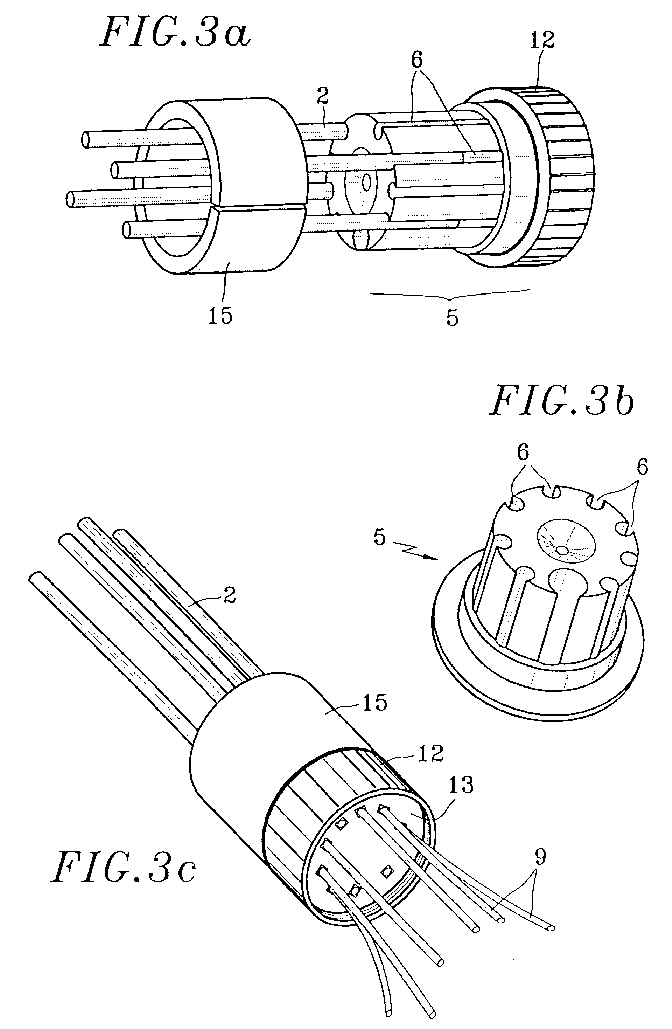

- la figure 3 b) représente un schéma du collecteur,
- la figure 3 c) représente une vue en perspective du collecteur.

L'infrastructure souterraine représentée sur la figure 1 a) est composée de chambres d'accès 1 reliées entre elles par des conduites 14. Ces conduites 14 arrivent sur la façade d'une chambre d'accès 1 au niveau d'un masque. Les chambres d'accès 1 peuvent comporter plusieurs masques.

La figure 1 b) déjà décrite illustre à titre d'exemple une conduite 14 contenant un gros câble 9, des tubes 2 protégeant des câbles 9 plus petits. Une conduite 14 peut également contenir des minitubes protégeant des microcâbles ou ne contenir qu'un de ces éléments.

La figure 1 c) représente une chambre d'accès 1 dans laquelle un fourreau souple 3 raccorde à un boîtier 4 des câbles issus des tubes 2 arrivant dans la chambre d'accès 1. Les câbles sont ainsi assemblés en sortie des tubes 2 et protégés tout au long du cheminement jusqu'au boîtier 4. Sur cette figure 1 c), les câbles sont cachés par les tubes 2 ou le fourreau 3. Le fourreau souple 3, dans lequel passent tout ou partie des câbles issus des tubes 2, peut s'accommoder de toute forme et volume de chambre à la différence des tubes 2 rigides. Ce fourreau 3 peut être un tuyau à enveloppe extrudée ou plissée hélicoïdalement et ainsi présenter de la souplesse et une bonne résistance à l'écrasement, à la torsion, à la pliure et aux efforts de traction. Outre cette protection mécanique, ce fourreau assure également une protection contre le vandalisme, la pollution, les rongeurs ou l'introduction de poussière, d'eau ou de boue. A titre indicatif, un tuyau à enveloppe extrudée ou plissée hélicoïdalement de 20 mm de diamètre peut contenir une dizaine de câbles 9 tels que des câbles à fibres optiques. Ce fourreau souple 3 peut atteindre quelques mètres voire beaucoup plus dans certaines configurations. Ainsi le boîtier 4 peut être déporté et exploité ou sécurisé à distance des tubes 2, éventuellement en dehors de la chambre d'accès 1, sur poteau, en façade d'immeuble ou selon toute autre situation de raccordement de tubes 2.

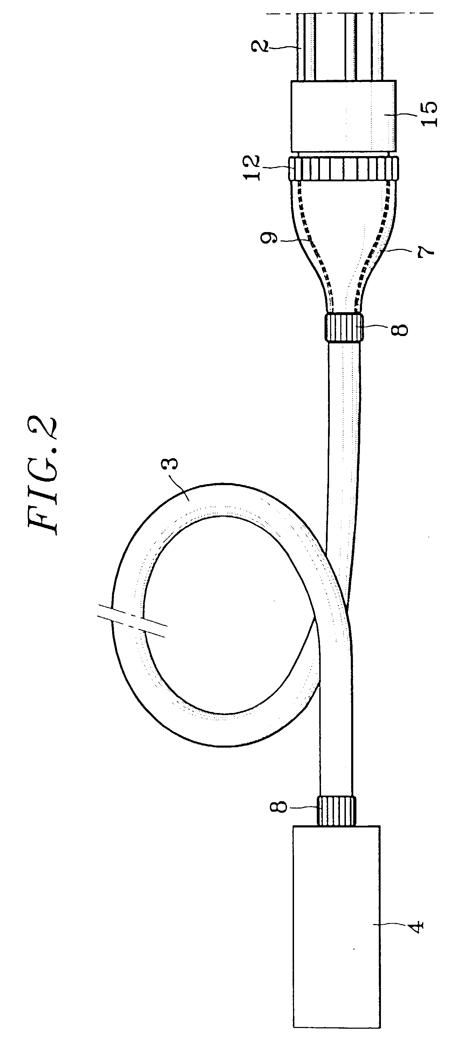

Dans le dispositif de raccordement entre l'extrémité de tubes 2 et un boîtier 4 abritant au moins deux câbles 9, dispositif représenté en figure 2, en sortie du boîtier 4 les câbles 9 passent dans un même fourreau souple 3 et vont entourés de ce fourreau 3 dans l'extrémité de tubes 2 de laquelle ils sortent gainés respectivement de tubes 2 moins souples que les câbles 9.

Selon cette figure 2, l'extrémité des tubes 2 arrivant dans la chambre d'accès 1 sont assemblés par le collecteur 5 qui peut éventuellement être lui-même fixé dans une zone de la chambre d'accès 1 par une bride ou tout autre élément de fixation 15 représenté sur les figures 3a) et 3c). Le collecteur 5 est relié par un écrou 12 à un élément de transition 7 lui-même relié au fourreau souple 3 par un raccord 8. Cet élément de transition 7 par exemple de forme tronconique assure une introduction facile des câbles 9 dans le fourreau 3, grâce à l'effet entonnoir.

Les raccords 8 placés à chaque extrémité du fourreau souple 3 permettent d'assurer le montage ou démontage du fourreau 3. Il peut s'agir d'écrous.

Le collecteur 5 est représenté sur les figures 3a), 3b), 3c). Le collecteur 5 peut être simplement constitué de la bride 15. Selon un mode de réalisation préférentiel indiqué sur la figure 3 a), le collecteur 5 comprend des conduits 6 représentés en figure 3 b) dans lesquels les tubes 2 sont introduits. Leur maintien peut être renforcé par collage par exemple. Les conduits 6 peuvent être ouverts partiellement sur leur longueur comme représenté sur la figure 3 b); le maintien des tubes 2 peut alors être renforcé par la bride 15 ou tout autre élément de serrage. Les conduits 6 peuvent être de diamètres différents et le collecteur 5 peut maintenir des tubes de diamètres différents par exemple 8 tubes de 8 mm de diamètre et un tube de 14 mm de diamètre. L'extrémité des tubes 2 aboutit au niveau du collecteur 5 libérant ainsi les câbles 9 côté face avant du collecteur 5. Certains tubes 2 peuvent être en attente de pose de câbles 9, d'autres peuvent en abriter un ou plusieurs. Afin d'éviter l'introduction de poussières, d'eau ou de boue sur la partie frontale du collecteur 5, un moyen 13 assurant un passage étanche des câbles 9 issus des tubes 2 est placé en extrémité du collecteur 5 sur sa face avant comme indiqué sur la figure 3 c). Ce moyen 13 peut être placé sur la face avant de la bride 15 si ce mode de réalisation du collecteur 5 a été choisi. Ce moyen 13 peut comporter une membrane en élastomère dont la découpe, la désoperculation ou la perforation est facile à réaliser avec un poinçon ou directement avec les câbles 9. L'épaisseur de cette membrane peut varier jusqu'à devenir un élément volumineux. Selon une variante de l'invention, des moyens préservant l'étanchéité des câbles 9 sont placés au niveau de chaque passage d'un élément à l'autre intervenant entre le collecteur 5 et le boîtier 4.

## Revendications

1. Dispositif de raccordement entre l'extrémité de tubes (2) protégeant un ou plusieurs câbles (9) et un boîtier (4), caractérisé en ce qu'il comprend un fourreau souple (3) permettant, en sortie des tubes (2), de raccorder au boîtier (4) les câbles (9) issus des tubes (2) en assurant la protection desdits câbles (9) et en permettant le déport du boîtier (4) auquel on doit accéder.

2. Dispositif selon la revendication 1 caractérisé en ce que le fourreau souple (3) comprend un tuyau à enveloppe plissée hélicoïdalement.

3. Dispositif selon la revendication 1 ou 2 caractérisé en ce que le fourreau souple (3) comprend un raccord (8) à ses extrémités pour assurer le montage ou le démontage.

4. Dispositif selon l'une des revendications 1 à 3 caractérisé en ce qu'il comporte un collecteur (5) pour assembler l'extrémité des tubes (2).

5. Dispositif selon la revendication 4 caractérisé en ce que le collecteur (5) comprend un moyen (13) pour assurer un passage étanche des câbles (9).

6. Dispositif selon la revendication 5 caractérisé en ce que le moyen (13) pour assurer un passage étanche des câbles (9) comporte une membrane en élastomère.

7. Dispositif selon l'une des revendications 4 à 6 caractérisé en ce que le collecteur (5) est raccordé au fourreau (3).

8. Dispositif selon l'une des revendications 4 à 7 caractérisé en ce que le collecteur (5) comprend des conduits (6) pour les tubes (2).

9. Dispositif selon la revendication 8 caractérisé en ce que les conduits (6) sont situés en périphérie du collecteur (5) .

10. Dispositif selon l'une quelconque des revendications 4 à 9 caractérisé en ce qu'il comporte un élément de transition (7) à effet d'entonnoir situé entre le collecteur (5) et le fourreau (3).

11. Procédé d'accès à des câbles (9) arrivant à un boîtier (4) situé dans une chambre d'accès (1), caractérisé en ce qu'il consiste à placer lesdits câbles (9) dans un fourreau souple (3) et de longueur suffisante pour pouvoir déporter le boîtier (4) auquel on doit accéder.
